(19) Europäisches Patentamt / European Patent Office / Office européen des brevets

(11) **EP 2 346 000 A1**

(12) **EUROPEAN PATENT APPLICATION**
published in accordance with Art. 153(4) EPC

(43) Date of publication:
**20.07.2011 Bulletin 2011/29**

(51) Int Cl.:
***G06T 11/20*** (2006.01)   ***G09G 5/20*** (2006.01)
***G09G 5/24*** (2006.01)

(21) Application number: **09824873.5**

(22) Date of filing: **09.11.2009**

(86) International application number:
**PCT/JP2009/069048**

(87) International publication number:
**WO 2010/053176 (14.05.2010 Gazette 2010/19)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **07.11.2008 JP 2008287183**

(71) Applicant: **Nec System Technologies, Ltd.
Osaka 540-8551 (JP)**

(72) Inventor: **TAMAI Junichi
Osaka-shi
Osaka 540-8551 (JP)**

(74) Representative: **Glawe, Delfs, Moll
Patent- und Rechtsanwälte
Postfach 26 01 62
80058 München (DE)**

(54) **BEZIER CURVE DRAWING DEVICE, BEZIER CURVE DRAWING METHOD, AND RECORDING MEDIUM**

(57)    A Bezier curve drawing device is configured as follows. A control point coordinate acquiring unit (10) acquires the coordinates of a plurality of control points of a Bezier curve. An inter-control point distance calculation unit (11) selects, using the minimum distance of a resolution for displaying the Bezier curve as a unit, either the horizontal distance or the vertical distance of adjacent control points of the Bezier curve, whichever is greater, adds up thus selected distances between adjacent control points, the added-up value being calculated as an indicator of the length of the Bezier curve. A division number setting unit (12) sets, based on the indicator of the length, the number of divisions to be used when the Bezier curve is divided and drawn. A Bezier division apex calculation unit (16) calculates, according to the number of divisions set by the division number setting unit (12), the coordinates of the end points of each interval obtained by dividing the Bezier curve.

**FIG. 2**

**Description**

Technical Field

The present invention relates to a Bezier curve drawing device that draws Bezier curves onto a display device or the like, and to a Bezier drawing method and recording medium.

Background Art

For a computer to draw smooth curves, often Bezier curves are used. An arbitrary curve can be approximated using a plurality of Bezier curves and smoothly displayed. Bezier curves are used in drawing vector graphics, especially characters.

Actually, when displaying a Bezier curve on a computer screen, a method is used wherein the Bezier curve is divided, each of the divided sections is an approximated line segment, and the overall Bezier curve is drawn using broken lines (broken line approximation). Several methods have been proposed as the method for setting the number of divisions. For example, in Patent Literature 1 a method is disclosed that uses a sequence of control points for the Bezier curve, then that Bezier curve is approximated with broken line, and the broken line data that approximates the Bezier curve is drawn. In the broken line approximation above, whether or not to perform division again is evaluated, and when it is determined that performing division again is necessary, the curve is divided again. Broken line approximation is then repeatedly executed. In the evaluation as to whether or not to perform division again, an estimated value of the chord length of the Bezier curve, and an estimated value of the are length of the Bezier curve are used as a reference for evaluation.

A method is disclosed in Patent Literature 2 of recursively performing division of a standard form segment until the distance between a middle point between two control points and a line connecting the starting point and ending point are within an allowable value or less, and when the distance is equal to or less than the allowable value, approximating that segment with a line segment. Moreover, the method below is disclosed in Patent Literature 3. A Cubic Bezier curve is divided in two beforehand, to become first and second Bezier curves. Next, for each Bezier curve, a straight-line approximation process having an error judgment step and a dividing step is recursively repeated, and the outer edges of each defined polygon for each Bezier curve that were finally obtained are taken to be the approximate straight line group for the original Bezier curve.

In addition to the methods described in Patent Literatures 1 to 3 of evaluating the degree of approximation of each division for approximating a Bezier curve with broken lines and performing division recursively, another method is disclosed in Patent Literature 4 that sets the number of sampling lines, which is the number of approximation straight lines that are used when performing straight-line approximation of a Bezier curve, in proportion to the sum of the distances between coordinate points that set the Bezier curve.

Related Art Literature

Patent Literature

Patent Literature 1: Unexamined Japanese Patent Application KOKAI Publication No. 2002-117411
Patent Literature 2: Unexamined Japanese Patent Application KOKAI Publication No. H11-203489
Patent Literature 3: Unexamined Japanese Patent Application KOKAI Publication No. H10-198811
Patent Literature 4: Unexamined Japanese Patent Application KOKAI Publication No. H02-126376

Disclosure of the Invention

Problems the Invention is to Solve

As described in Patent Literatures 1 to 3, when displaying Bezier curves on a display using a method of approximating the Bezier curve using a plurality of line segments, the number of divisions is fixed regardless of the size of the Bezier curve, so there is an excessive number of divisions for a Bezier curve for a small shape, and the improved effect of smoothness of the curve displayed is small when compared with the amount of arithmetic processing. On the other hand, for a Bezier curve for a large shape, in some cases there will be an insufficient number of divisions, so as a result it becomes impossible to obtain satisfactory image quality.

However, in a method of evaluating the degree of approximation of each division and dividing recursively, it is possible to obtain a smooth display according to the shape of the Bezier curve, but it is necessary to evaluate the distance in the arithmetic processing during evaluation of the degree of approximation, and the amount of arithmetic processing increases proportional to the number of divisions. Therefore, when attempting to maintain quality of a drawn image, the drawing speed decreases. Moreover, even in the method of Patent Literature 4, it is necessary to calculate squares and square roots for calculating the distance between control points, and thus the larger the number of control points, the greater the amount of arithmetic processing must be performed, and the drawing speed decreases.

Taking the above problems into consideration, it is the object of the present invention to provide a Bezier curve drawing device and drawing method that are capable of selecting a suitable number of divisions by taking into consideration the drawing quality and drawing speed when dividing and drawing a Bezier curve using line segments.

Means for Solving the Problems

A Bezier curve drawing device according to a first aspect of the present invention comprises:

a control point acquiring unit that acquires the coordinates of a plurality of control points of a Bezier curve;
a distance index calculation unit that, with the minimum distance of the resolution for displaying the Bezier curve as a unit, selects the larger of the distance in the horizontal direction and the distance in the vertical direction between adjacent control points of the Bezier curve, totals the selected distance between each of the control points and calculates the totaled value as an index for the length of the Bezier curve;
a division number setting unit that, based on the index for the length, sets the number of divisions when dividing and drawing the Bezier curve; and
a division point calculation unit that, according to the number of divisions set by the division number setting unit, calculates the coordinates of the end points between each of the divided section of the Bezier curve.

A Bezier curve drawing method according to a second aspect of the present invention comprises:

a control point acquiring step of acquiring the coordinates of a plurality of control points of a Bezier curve;
a distance index calculation step of, with the minimum distance of the resolution for displaying the Bezier curve as the unit, selecting the larger of the distance in the horizontal direction and the distance in the vertical direction between adjacent control points of the Bezier curve, totaling the selected distance between each of the control points and calculating the totaled value as an index for the length of the Bezier curve;
a division number setting step of, based on the index for the length, setting the number of divisions when dividing and drawing the Bezier curve; and
a division point calculation step that, according to the number of divisions set by the division number setting step, calculating the coordinates of the end points between each of the divided section of the Bezier curve.

A recording medium of a third aspect of the present invention stores a program for causing a computer to execute:

a control point acquiring step of acquiring the coordinates of a plurality of control points of a Bezier curve;
a distance index calculation step of, with the minimum distance of the resolution for displaying the Bezier curve as the unit, selecting the larger of the distance in the horizontal direction and the distance in the vertical direction between adjacent control points of the Bezier curve, totaling the selected distance between each of the control points and calculating the totaled value as an index for the length of the Bezier curve;
a division number setting step of, based on the index for the length, setting the number of divisions when dividing and drawing the Bezier curve; and
a division point calculation step of, according to the number of divisions set by the division number setting step, calculating the coordinates of the end points between each of the divided section of the Bezier curve.

Advantages of the Invention

With the present invention, the number of divisions is set according to the size of the Bezier curve, so that for a Bezier curve having a small shape, the amount of arithmetic processing can be reduced while maintaining the image quality, and for a Bezier curve having a large shape, image quality can be improved with a suitable amount of arithmetic processing. As a result, it is possible to improve the drawing speed while maintaining drawing quality.

Brief Description of Drawings

FIG. 1A is a diagram explaining a Bezier curve.

FIG. 1B is a diagram explaining a Bezier curve.

FIG. 2 is a block diagram illustrating an example of the construction of a Bezier curve drawing device of an embodiment of the present invention.

FIG. 3 is a block diagram illustrating an example of the construction of a drawing device that includes a Bezier drawing device.

FIG. 4 is a diagram illustrating an example of setting the number of divisions.

FIG. 5 is a diagram illustrating an example of parameters for dividing and calculating a Bezier curve.

FIG. 6 is a flowchart illustrating an example of operation of a Bezier curve dividing process of an embodiment of the present invention.

FIG. 7 is a block diagram illustrating an example of the physical construction of a Bezier curve drawing device when mounted in a computer.

Best Mode for Carrying Out the Invention

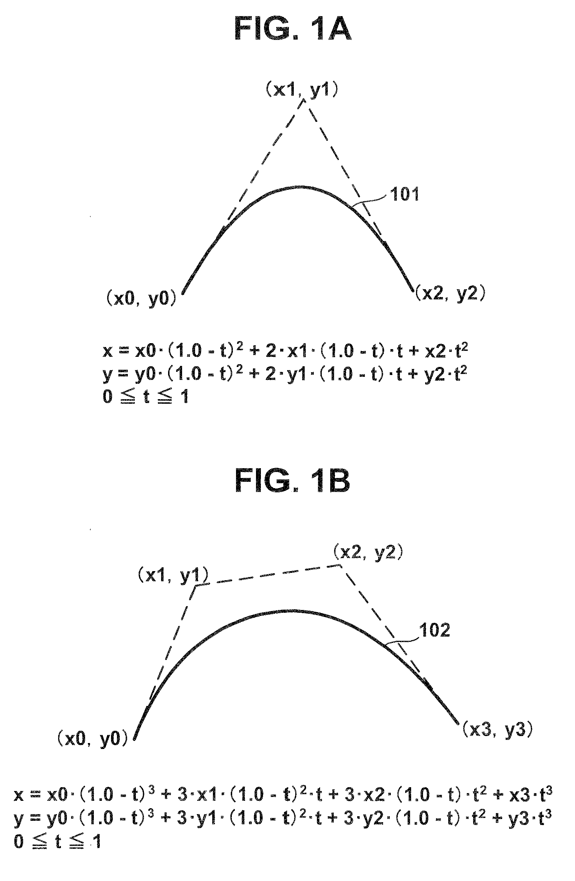

When drawing a smooth curve in a vector graphic, a Bezier curve is used. A Bezier curve will be explained using FIGS. 1A and 1B. When drawing a curve of a vector graphic, mainly a Quadratic Bezier curve 101 and a Cubic Bezier curve 102 are used. A Quadratic Bezier curve 101 is expressed by Equations (1) below with t as a parameter.

$$x = x0 \bullet (1-t)^2 + 2 \bullet x1 \bullet (1-t) \bullet t + x2 \bullet t^2$$

$$y = y0 \bullet (1-t)^2 + 2 \bullet y1 \bullet (1-t) \bullet t + y2 \bullet t^2$$

$$0 \leq t \leq 1$$

$$(1)$$

The coordinates of the control points of the Quadratic Bezier curve 101 are given by (x0, y0), (x1, y1) and (x2, y2). By changing the value of the parameter t from 0 to 1, the Quadratic Bezier curve is obtained.

A Cubic Bezier curve 102 is expressed by Equations (2)

$$x = x0 \bullet (1-t)^3 + 3 \bullet x1 \bullet (1-t)^2 \bullet t + 3 \bullet x2 \bullet (1-t) \bullet t^2 + x3 \bullet t^3$$

$$y = y0 \bullet (1-t)^3 + 3 \bullet y1 \bullet (1-t)^2 \bullet t + 3 \bullet y2 \bullet (1-t) \bullet t^2 + y3 \bullet t^3$$

$$0 \leq t \leq 1$$

$$(2)$$

The coordinates of the control points of the Cubic Bezier curve 102 are given by (x0, y0), (x1, y1), (x2, y2) and (x3, y3). By changing the value of the parameter t from 0 to 1, the Cubic Bezier curve 102 is obtained.

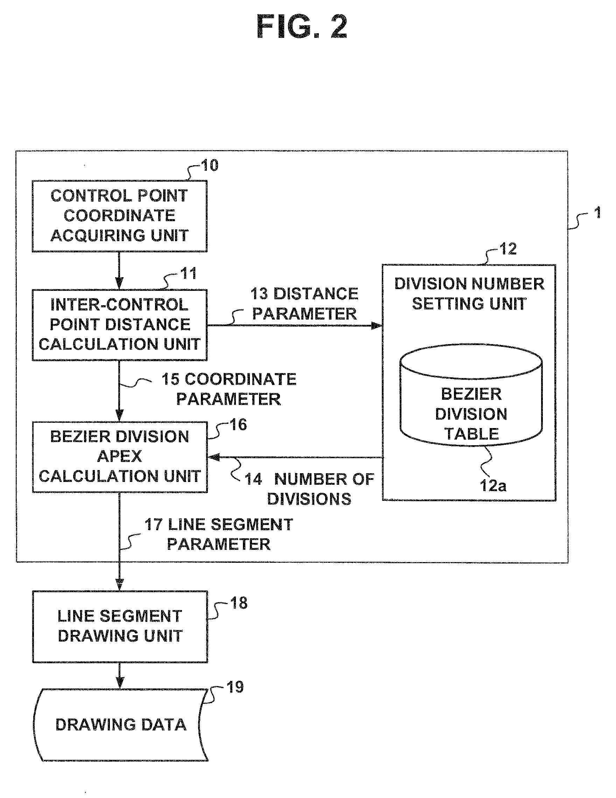

FIG. 2 is a block diagram illustrating an example of construction of a drawing device of an embodiment of the present invention. The Bezier curve drawing device 1 comprises a control point coordinate acquiring unit 10, an inter-control point distance calculation unit 11, a division number setting unit 12 and a Bezier division apex calculation unit 16. The division number setting unit 12 includes a Bezier division table 12a. The Bezier curve drawing device 1 has functions of calculating the coordinates of the points (hereafter called dividing points) where a Bezier curve is divided based on the coordinates of the control points that define the Bezier curve, connecting the calculated coordinates with line segments, and approximating the Bezier curve with the line segments (hereafter, called "broken line approximation").

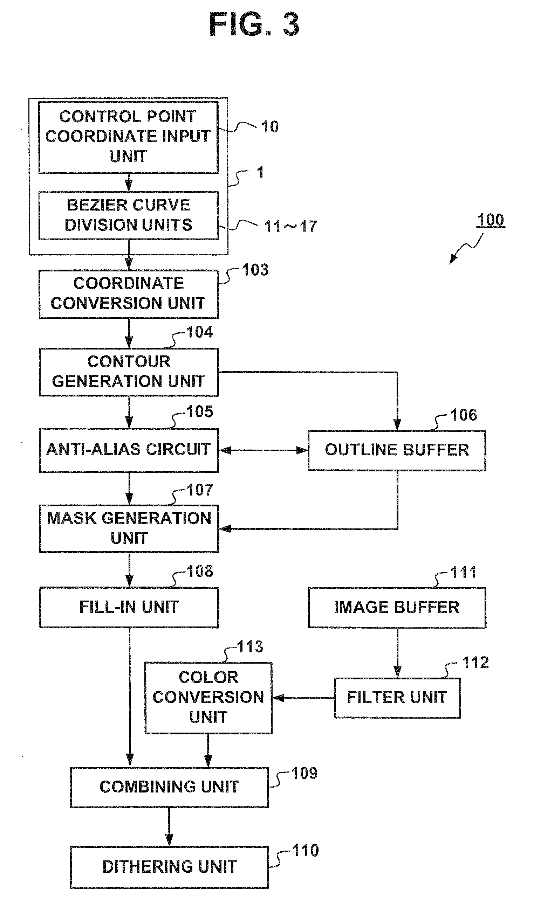

FIG. 3 is a block diagram illustrating an example of the construction of a drawing device that includes the Bezier curve drawing device 1. The drawing device 100 comprises a Bezier curve drawing device 1, a coordinate conversion unit 103, a contour generation unit 104, an anti-alias circuit 105, an outline buffer 106, a mask generation unit 107, a fill-in unit 108, a combining unit 109, a dithering unit 110, an image buffer 111, a filter unit 112 and a color conversion unit 113. The line segment drawing unit 18 in FIG. 2 corresponds to the each unit and buffer from the coordinate conversion unit 103 on.

The processing by the drawing device 100 will be explained. The Bezier curve drawing device 1 outputs coordinates of the division points for broken line approximation of a Bezier curve, after which the coordinate conversion unit 103 converts the coordinates of the division points into coordinates in the entire displayed screen. The contour generation unit 104 stores information about pixels through which each of line segments from the coordinates of the division points pass (hereafter, referred to as "contour data") in the outline buffer 106. The anti-alias circuit 105 performs anti-aliasing on the contour data, which was generated by the contour generator 104, according to the display resolution. Next, the mask generation unit 107 generates mask data from the contour data for which anti-aliasing processing was performed. The fill-in unit 108 performs a fill-in process according to mask data.

On the other hand, when superimposing the data over image data that is represented by color or brightness data for each pixel such as a bitmap, that image data is stored in the image buffer 111. The image data undergoes processing such as edge enhancement by the filter unit 112, and singularity removal by the color conversion unit 113, and after color conversion is performed for the cooler to suit the display, is combined with the image that was generated from the contour data. Finally, the dithering unit applies a dithering effect so that the image can be easily viewed on the screen, and generates drawing data 19 (FIG. 2).

Returning to FIG. 2, the construction of the Bezier curve drawing device 1 is explained. The control point coordinate acquiring unit 10 acquires the coordinates of the control points of the Bezier curve. The Bezier curve that is represented by the set of control points is generated by a Bezier curve generation unit (not illustrated in the figure), or is provided from another device.

The inter-control point distance calculation unit 11 calculates distance parameter 13, which is an index of the length of the Bezier curve, from the coordinates of the control points of the Bezier curve acquired by the control point coordinate acquisition unit 10. The inter-control point distance calculation unit 11 outputs the calculated distance parameter 13 to the division number setting unit 12. The division number setting unit 12 receives the distance parameter 13, and outputs the number of divisions 14 that corresponds to the distance parameter 13 to the Bezier division apex calculation unit 16. This number of divisions 14 is used for setting the number of divisions of the parameter t in the Bezier curve equations.

The distance parameter 13 is a value for setting the number of divisions approximated by broken lines when displaying a Bezier curve, and is an index of the length of the Bezier curve. The number of divisions in broken line approximation of the Bezier curve changes according to the display resolution even for a Bezier curve having the same control point coordinates. Therefore, the distance parameter 13 is calculated, with the minimum distance of the resolution at which the Bezier curve is displayed as the unit. The control point coordinate acquiring unit 10 acquires the scale at which the control point coordinates are converted to the display resolution. The inter-control point distance calculation unit 11 converts the control point coordinates at the acquired scale, and calculates the distance parameter 13 using the minimum distance of the display resolution as the unit. Alternatively, it is possible to provide control point coordinates that were converted to the display resolution beforehand.
In the following, the control point coordinates will be explained as having been converted to display resolution.

The inter-control point distance calculation unit 11 outputs a coordinate parameter 15 to the Bezier division apex calculation unit 16. Here, this coordinate parameter 15 is the same as the control point coordinates. The Bezier division apex calculation unit 16 uses the coordinate parameter 15 and number of divisions 14 to divide the Bezier curve, and calculates the coordinates for each apex of the broken lines subject to the approximation (line segment parameter 17). The Bezier division apex calculation unit 16 outputs the line segment parameter 17 to a line segment drawing unit 18. By drawing line segments based on the line-segment parameter 17, the line-segment drawing unit 18 generates drawing data 19 for displaying the Bezier curve on the display. The processing up until the drawing data 19 is obtained will be displayed in detail.

The inter-control point distance calculation unit 11 calculates the distance parameter 13 as described below. The length of the Bezier curve can be considered to be mostly proportional to the sum of the distances between control points. Furthermore, the distance between control points can be evaluated by the larger of the difference between the x coordinates of adjacent control points and the difference between the y coordinates. Therefore, the value obtained by totaling the larger of the absolute value of the difference between the x coordinates of adjacent control points (horizontal distance) and the absolute value of the difference between the y coordinates (vertical distance) between adjacent control points is calculated as the distance parameter 13. In other words, it can be expressed by the following equations.

When L is taken to be the distance parameter 13, for a Quadratic Bezier curve the equations become as below.

$$L01 = \max\left(|x0 - x1|, |y0 - y1|\right)$$

$$L12 = \max\left(|x1 - x2|, |y1 - y2|\right)$$

$$L = L01 + L12$$

The distance parameter 13 (L) for a Cubic Bezier curve becomes as below.

$$L01 = \max (|x0 - x1|, |y0 - y1|)$$

$$L12 = \max (|x1 - x2|, |y1 - y2|)$$

$$L23 = \max (|x2 - x3|, |y2 - y3|)$$

$$L = L01 + L12 + L23$$

Topically, the distance parameter 13 (L) of an n-dimensional Bezier curve is expressed as below.

$$L01 = \max (|x0 - x1|, |y0 - y1|)$$

$$L12 = \max (|x1 - x2|, |y1 - y2|)$$

$$...$$

$$Ln{-}1n = \max (|xn{-}1 - xn|, |yn{-}1 - yn|)$$

$$L = L01 + L12 + ... + Ln{-}1n$$

The distance parameter 13 (L) above is a value smaller than the total Euclidean distance between control points, however, the distance parameter 13 (L) nearly represents the size of the Bezier curve, so by carefully adjusting the number of divisions corresponding to the distance parameter 13 (L), it is possible to perform broken line approximation while maintaining the display quality of the Bezier curve.

The inter-control point distance calculation unit 11 outputs the calculated distance parameter 13 (L) to the division number setting unit 12. The division number setting unit 12 references a Bezier division table 12a to calculate the number of divisions that corresponds to the distance parameter 13 (L). This number of divisions is used as the number of divisions for the value of the parameter t of the Bezier curve.

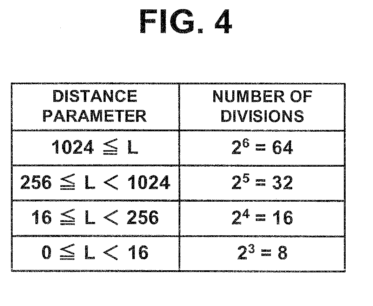

The Bezier division table 12a in FIG. 4 is a diagram illustrating an example of that correspondence between the distance parameter 13 (L) and the number of divisions. As illustrated in FIG. 4, the value of the distance parameter 13 (L) is divided by power of 2, to set the number of divisions for each step. In other words, when the distance parameter 13 (L) is expressed as a binary number, the number of divisions is set in stages according to the number of digits of the value expressed in binary number.

In the example in FIG. 4, the number of divisions is set to correspond to the case when the distance parameter 13 is four digits or less in binary number ($0 \leq L < 16$), for the case when greater than four digits but no greater than eight digits ($16 \leq L < 256$), for the case when greater than eight digits but no greater than ten digits ($256 \leq L < 1024$), and for the case when greater than 10 digits ($1024 \leq L$). In the example in FIG. 4, when the maximum value of the resolution of the horizontal width of display screen is taken to be 2048, the distance parameter is divided by 1/2 of that ($2048 \cdot 1/2 = 1024$), and next, is divided by the square of 1/2, that is, 1/4 ($1024 \cdot 1/4 = 256$). Furthermore, this is similarly divided by the square of 1/4, that is, 1/16 ($256 \cdot 1/16 = 16$).

In FIG. 4, the number of divisions is set to a power of 2. In other words, the distance parameter is in binary number, and

when it is four digits or less ($0 \leq L < 16$), the number of divisions is set to $2^3 = 8$,

when it is greater than four digits but no greater than eight digits ($16 \leq L < 256$), the number of divisions is set to $2^4 = 16$,

when it is greater than eight digits but no greater than ten digits ($256 \leq L < 1024$), the number of divisions is set to $2^5 = 32$, and

when it is greater than ten digits ($1024 \leq L$), the number of divisions is set to $2^6 = 64$.

By taking the stage of the distance parameter 13 and the number of divisions to be power of 2, the calculation by the division number setting unit 12 becomes very simple. These calculations can be performed by using bit shift and bit logical calculation, so even when implemented by a circuit, is very simple. Moreover, human perception is close to being logarithmic, so when the stage and number of divisions are set in power of 2 as described above, what is perceived to be a uniform scale is obtained.

The division number setting unit 12 outputs the number of divisions 14 to the Bezier division apex calculation unit 16. The Bezier division apex calculation unit 16 performs calculation of the line segment parameter 17 based on the given coordinate parameter 15 and the number of divisions 14.

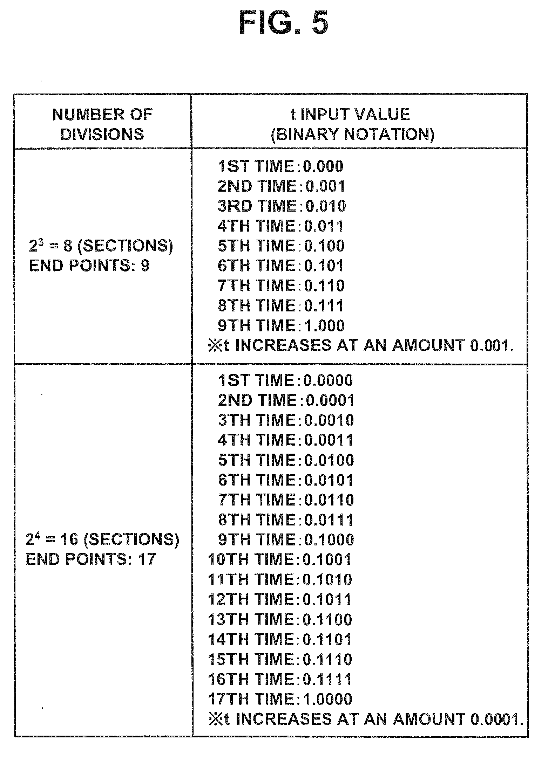

Referring to FIG. 5, examples of the cases when the number of divisions is $2^3 = 8$, and when the number of divisions is $2^4 = 16$ are explained. When the number of division is $2^3$, the Bezier division apex calculation unit 16 performs calculation a total of $2^3 + 1$ times = 9 times. The minimum value and maximum value of the parameter t are always 0 and 1. Each time the parameter t is increased, calculation of the Bezier curve in FIG. 1 is performed, and coordinates (x, y) are calculated for the values of the parameter t. Here, when the number of divisions is set to a power of 2, the values of the parameter t can be calculated using a binary counter.

When the number of divisions is $2^4 = 16$, the respective (x, y) are calculated using Equations in FIG. 1 a total of 17 times according to the number of times t is input (total of 17 times). The data obtained when the line segment drawing unit 18 connects these (x, y) coordinates with straight lines is drawing data 19. Even here, the number of divisions is set to a power of 2, so that the values of the parameter t can be calculated using a binary counter.

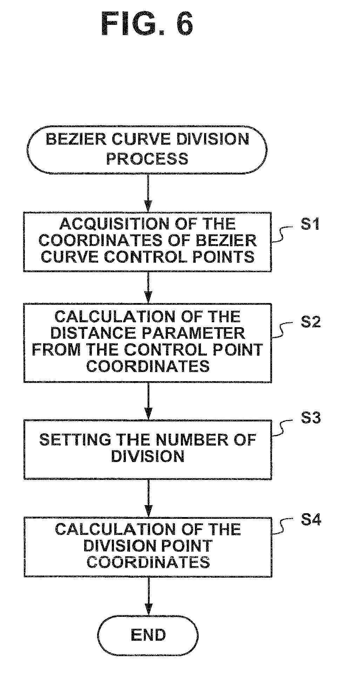

FIG. 6 is a flowchart illustrating an example of the operation of Bezier curve division process of this embodiment. The Bezier curve division process of FIG. 6 is executed each time a Bezier curve is read during the drawing process. When the Bezier curve division process is executed, the control point coordinate acquiring unit 10 acquires the coordinates of the control points of the Bezier curve (step S1). As described above, at the same time, the control point coordinate acquiring unit 10 acquires the scale at which the control point coordinates are converted to the display resolution.

The inter-control point distance calculation unit 11 converts the control point coordinates to the scale of the display resolution, selects the larger of the absolute value of the difference between the x coordinates of adjacent control points (horizontal distance) and the absolute value of the difference between the y coordinates (vertical distance), totals the selected absolute values for the difference between each control point, and sets the totaled value as the distance parameter 13 (step S2). The inter-control point distance calculation unit 11 then outputs the distance parameter 13 to the division number setting unit 12. At the same time, the inter-control point distance calculation unit 11 outputs the coordinate parameter 15, which is the coordinates of the control points of the Bezier curve, to the Bezier division apex calculation unit 16.

The division number setting unit 12 references a Bezier division table 12a such as illustrated in FIG. 4, for example, and sets the number of divisions 14 of the Bezier curve from the distance parameter 13 (step S3). When the distance parameter 13 is divided by a number that is a power of 2, the number of divisions can be determined by the number of digits of the distance parameter 13 expressed in binary number. Moreover, when the number of divisions is a power of 2, any of the bits of the binary number of the number of divisions is 1. The division number setting unit 12 outputs the set number of divisions 14 to the Bezier division apex calculation unit 16.

From the number of divisions 14 and the coordinate parameter 15, the Bezier division apex calculation unit 16 divides the domain of the parameter t of the Bezier curve into the same number of sections as the number of divisions, and calculates the x coordinate and y coordinate of each end point (broken line apex) (step S4). The Bezier division apex calculation unit 16 outputs the coordinates of the each broken line apex used for approximating the Bezier curve (line segment parameter 17) to the line segment drawing unit 18, and the division process for one Bezier curve ends.

With the Bezier curve drawing device 1 of this embodiment, the number of divisions for drawing the Bezier curve is set based on the parameters (indices) related to the distance between the control points of the Bezier curve. It is also possible to set a smaller number of divisions for a small Bezier curve, and to set a larger number of divisions for a large Bezier curve.

The number of stages of the distance parameter 13 and the number of divisions in the example of this embodiment are just examples, and can be set arbitrarily according to the size and resolution of the display screen, and the Bezier curve. For example, when printing the Bezier curve, preferably the number of the stages of the distance parameter 13, the number of their ends and the number of divisions are changed to correspond to the resolution.

The totaled value, between control points, of the sum of the absolute values of the differences between x coordinates and the differences between y coordinates can be taken to be the distance parameter. In that case, the distance parameter is a value larger than the total Euclidean distance between control points; however, by carefully adjusting the number of divisions that correspond to the distance parameter, it is possible to perform broken line approximation while maintaining the display quality of the Bezier curve. In this case, there is no need to compare the difference between the x coordinates and the difference between the y coordinates.

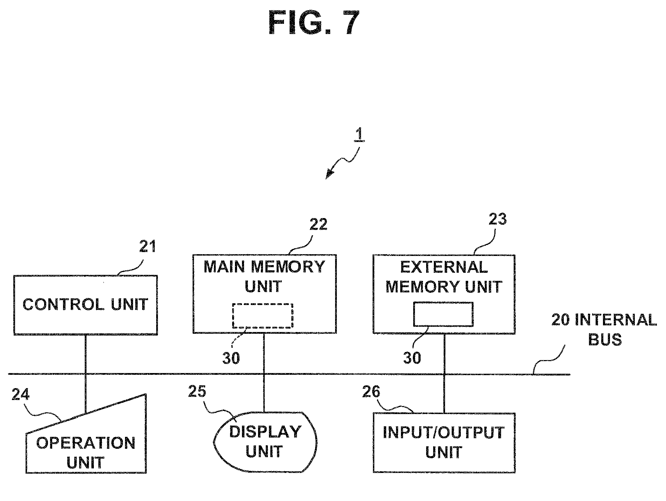

FIG. 7 is a block diagram illustrating an example of physical construction of the case when the Bezier curve drawing device 1 is mounted in a computer. The Bezier curve drawing device 1 of this embodiment can be achieved by hardware configuration that is the same as a typical computer. The Bezier curve drawing device 1, as illustrated in FIG. 7, comprises a control unit 21, a main memory unit 22, an external memory unit 23, an operation unit 24, a display unit 25 and an input/output unit 26. The main memory unit 22, external memory unit 23, operation unit 24, display unit 25 and input/output unit 26 are all connected to the control unit 21 via an internal bus 20.

The control unit 21 comprises a CPU (Central Processing Unit) and the like, and executes processing for drawing a Bezier curve according to a program 30 that is stored in the external memory unit 23.

The main memory unit 22 comprises RAM (Random-Access Memory) and the like, and is loaded with the program 30 that is stored in the external memory unit 23, and is used as a work area for the control unit 21. The Bezier division table 12a above is loaded from the external memory 23 and configured in the main memory unit 22.

The external memory unit 23 comprises non-volatile memory such as a flash memory, a hard disk, DVD-RAM (Digital Versatile Disc Random-Access Memory), DVD-RW (Digital Versatile Disc ReWritable), and stores in advance the program 30, which causes the control unit 21 to perform the processing described above, supplies the data that the program 30 stores to the control unit 21 according to instructions from the control unit 21, and stores data that is supplied from the control unit 21.

The operation unit 24 comprises a keyboard and a pointing device such as a mouse, and an interface device that connects the keyboard and pointing device to the internal bus 20. Instructions for creating, inputting, transmitting and receiving image data that includes Bezier curves, specifications of images to be displayed, the range and magnification rate of the drawing area and the position of the drawing area on the display are input and supplied to the control unit 21 via the operation unit 24.

The display unit 25 comprises a CRT (Cathode Ray Tube) or LCD (Liquid Crystal Display), and displays drawn images.

The input/output unit 26 comprises a wireless transceiver, a wireless modem or network terminal device, and a serial interface or LAN (Local Area Network) interface that connects these. Image data that includes Bezier curves can be received or transmitted via the input/output unit 26.

The Bezier curve drawing device 1 of the present invention can be constructed as an electronic circuit that is mounted with circuits comprising hardware parts such as an LSI (Large Scale Integration) in which circuits that can achieve the function of drawing Bezier curves as described above are assembled. Moreover, by having the control unit 21 of the computer processing unit above execute a Bezier curve drawing program that performs each of the functions above, it is possible to achieve the Bezier curve drawing device 1 through software. In that case, the CPU of the control unit 21 executes the processing of the Bezier curve drawing unit 1 by loading the program 30 that is stored in the external memory unit 23 into the main memory unit 22 and executing the program 30, controlling the operation of each part and performing all of the functions above.

As described above, in the Bezier curve drawing device 1 of this embodiment, the process of calculating the number of divisions of the Bezier curve can be simple addition and subtraction, bit shifting and logical operation. Multiplication and division do not appear until the calculation of the parameter t. Therefore, the arithmetic processing and circuitry can be simple, and thus arithmetic processing for drawing Bezier curves can be performed at high speed.

As explained above, the Bezier curve drawing device 1 of this embodiment has the following advantages.

The first advantage is that by having the inter-control point calculation unit 11 calculate the distance parameter of the Bezier curve, it is possible to dynamically change the number of line segment divisions of the Bezier curve. As a result, by reducing the number of divisions for a Bezier curve having a relatively small size, it is possible to reduced the amount of processing by the Bezier division apex calculation unit 16, and by increasing the number of divisions for a Bezier curve having a relatively large size, it is possible to improve the image quality of the drawn Bezier curve.

The second advantage is that by simplifying the processing by the inter-control point distance calculation unit 11, it is possible to reduce the size of the processing circuitry of the hardware. A value that includes the totaled sum of the larger of the distance in the horizontal direction and the distance in the vertical direction between adjacent control points of a Bezier curve is calculated as an index of the length of the Bezier curve, so that calculation of an index for the size of the Bezier curve is simple. Furthermore, the index for the length is divided by numbers that are power of 2, and the number of divisions is set in stages, so that the calculation for setting the number of divisions is simple.

The third advantage is that by making the number of divisions a power of 2, the increase in the parameter t of the Bezier curve is in a format that makes it easy to express by the 1 digit of a binary number, and thus that calculation circuit can be easily mounted in the hardware.

The fourth advantage is that the value set for the number of divisions is variable. The number of divisions of a Bezier curve can be easily changed according to the required drawing performance and drawing quality.

The following are also included as other preferred forms of the present invention.

In the Bezier curve drawing device according to one aspect of the present invention, preferably the division number setting unit divides the index for the length by a numerical value that is a power of 2, and sets the number of divisions for each divided stage.

Preferably, the division number setting unit divides the binary index for the length in stages of when the index is four digits or less, when the index is greater than four digit but no greater than eight digits, when the index is greater than eight digits but no greater than 10 digits, and when the index is greater than 10 digits, and sets the number of divisions to correspond to the respective case.

Preferably, the division number setting unit sets the number of divisions to a number that is a power of 2.

Furthermore, preferably, the division number setting unit sets the number of divisions to 8, 16, 32 or 64.

In the Bezier drawing method according to a second aspect of the present invention, preferably, in the division number setting step, the index for the length is divided by a numerical value that is a power of 2, and the number of divisions is set for each divided stage.

Preferably, in the division number setting step, when the index for the length is a binary number, and is divided into the cases of being four digits or less, being greater than four digit but no greater than eight digits, being greater than eight digits but no greater than 10 digits, and being greater than 10 digits, the number of divisions is set to correspond to the respective case.

Preferably, in the division number setting step, the number of divisions is set to a number that is a power of 2.

Furthermore, preferably, in the division number setting step, the number of divisions is set to 8, 16, 32 or 64.

Moreover, the hardware configuration and flowcharts are examples and can be arbitrarily changed or modified.

The portion that is the center for performing the processing of the Bezier curve drawing device 1, which comprises a control unit 21, a main memory unit 22, an external memory unit 23, an operation unit 24, and input/output unit 26 and internal bus 20, can be achieved using a normal computer system without the need of a special system. For example, it is possible to construct a Bezier curve drawing device 1 for executing the operation above, by storing a computer program for executing the operation above on a recording medium (such as flexible disk, CD-ROM, DVD-ROM) that is readable by a computer, then distributing that program and installing it on a computer. It is also possible to construct a Bezier curve drawing device 1 by storing that computer program in a memory device of a server on a communication network such as the Internet, and downloading that program by a normal computer system.

In the case where the function of the Bezier curve drawing device 1 is achieved by an operation shared by the OS (operating system) and an application program, or by the OS and application program working together, it is possible to store just the portion for the application program on a recording medium or memory device.

Moreover, it is also possible to place the computer program on a carrier wave and distribute the program via a communication network. For example, the computer program can be posted on a bulletin board (BBS, Bulletin Board System) of a communication network, and the computer program can be distributed via the network. Construction can also be such that it is possible to execute the above processing by starting the computer program, and under the control of the OS, to execute that computer program like other application programs.

This application is based on Japanese Patent Application No. 2008-287183, filed on November 7, 2008. The specification, claims and drawings of Japanese Patent Application No. 2008-287183 are incorporated by reference in this specification.

Explanation of Reference Numbers

**[0073]**

| | |
|---|---|
| 1, 100 | Bezier curve drawing device |
| 10 | Control point coordinate acquiring unit |
| 11 | Inter-control point distance calculation unit |
| 12 | Division number setting unit |
| 12a | Bezier division table |
| 16 | Bezier division apex calculation unit |
| 18 | Line segment drawing unit |
| 21 | Control unit |
| 22 | Main memory unit |
| 23 | External memory unit |
| 24 | Operation unit |
| 25 | Display unit |
| 26 | Input/output unit |
| 30 | Program |
| 103 | Coordinate conversion unit |
| 104 | Contour generation unit |
| 105 | Anti-alias circuit |
| 106 | Outline buffer |
| 107 | Mask generation unit |

| 108 | Fill-in unit |
| 109 | Combining unit |
| 110 | Dithering unit |
| 111 | Image buffer |
| 112 | Filter unit |
| 113 | Color conversion unit |

**Claims**

1. A Bezier curve drawing device comprising:

   a control point acquiring unit that acquires the coordinates of a plurality of control points of a Bezier curve;
   a distance index calculation unit that, with the minimum distance of the resolution for displaying the Bezier curve as a unit, selects the larger of the distance in the horizontal direction and the distance in the vertical direction between adjacent control points of the Bezier curve, totals the selected distance between each of the control points and calculates the totaled value as an index for the length of the Bezier curve;
   a division number setting unit that, based on the index for the length, sets the number of divisions when dividing and drawing the Bezier curve; and
   a division point calculation unit that, according to the number of divisions set by the division number setting unit, calculates the coordinates of the end points between each of the divided section of the Bezier curve.

2. The Bezier curve drawing device according to claim 1, wherein
   the division number setting unit divides the index for the length by a numerical value that is a power of 2, and sets the number of divisions for each divided stage.

3. The Bezier curve drawing device according to claim 2, wherein, the division number setting unit divides the binary index for the length in stages of when the index is four digits or less, when the index is greater than four digit but no greater than eight digits, when the index is greater than eight digits but no greater than 10 digits, and when the index is greater than 10 digits, and sets the number of divisions to correspond to the respective case.

4. The Bezier curve drawing unit according to claim 1, wherein the division number setting unit sets the number of divisions to a number that is a power of 2.

5. The Bezier curve drawing unit according to claim 4, wherein the division number setting unit sets the number of divisions to 8, 16, 32 or 64.

6. A Bezier curve drawing method comprising:

   a control point acquiring step of acquiring the coordinates of a plurality of control points of a Bezier curve;
   a distance index calculation step of, with the minimum distance of the resolution for displaying the Bezier curve as the unit, selecting the larger of the distance in the horizontal direction and the distance in the vertical direction between adjacent control points of the Bezier curve, totaling the selected distance between each of the control points and calculating the totaled value as an index for the length of the Bezier curve;
   a division number setting step of, based on the index for the length, setting the number of divisions when dividing and drawing the Bezier curve; and
   a division point calculation step of, according to the number of divisions set by the division number setting step, calculating the coordinates of the end points between each of the divided section of the Bezier curve.

7. The Bezier curve drawing method according to claim 6, wherein,
   in the division number setting step, the index for the length is divided by a numerical value that is a power of 2, and the number of divisions is set for each divided stage.

8. The Bezier curve drawing method according to claim 7, wherein,
   in the division number setting step, when the index for the length is a binary number, and is divided into the cases of being four digits or less, being greater than four digits but not greater than eight digits, being greater than eight digits but not greater than 10 digits, and being greater than 10 digits, the number of divisions is set correspond to the respective case.

**9.** The Bezier curve drawing method according to claim 6, wherein,
in the division number setting step, the number of divisions is set to a number that is a power of 2.

**10.** The Bezier curve drawing method according to claim 9, wherein,
in the division number setting step, the number of divisions is set to 8, 16, 32 or 64.

**11.** A recording medium that stores a program for causing a computer to execute:

a control point acquiring step of acquiring the coordinates of a plurality of control points of a Bezier curve;
a distance index calculation step of, with the minimum distance of the resolution for displaying the Bezier curve as a unit, selecting the larger of the distance in the horizontal direction and the distance in the vertical direction between adjacent control points of the Bezier curve, totaling the selected distance between each of the control points and calculating the totaled value as an index for the length of the Bezier curve;
a division number setting step of, based on the index for the length, setting the number of divisions when dividing and drawing the Bezier curve; and
a division point calculation step of, according to the number of divisions set by the division number setting step, calculating the coordinates of the end points between each of the divided section of the Bezier curve.

# FIG. 1A

$(x1, y1)$

101

$(x0, y0)$                      $(x2, y2)$

$$x = x0 \cdot (1.0 - t)^2 + 2 \cdot x1 \cdot (1.0 - t) \cdot t + x2 \cdot t^2$$
$$y = y0 \cdot (1.0 - t)^2 + 2 \cdot y1 \cdot (1.0 - t) \cdot t + y2 \cdot t^2$$
$$0 \leqq t \leqq 1$$

# FIG. 1B

$(x2, y2)$

$(x1, y1)$

102

$(x0, y0)$                      $(x3, y3)$

$$x = x0 \cdot (1.0 - t)^3 + 3 \cdot x1 \cdot (1.0 - t)^2 \cdot t + 3 \cdot x2 \cdot (1.0 - t) \cdot t^2 + x3 \cdot t^3$$
$$y = y0 \cdot (1.0 - t)^3 + 3 \cdot y1 \cdot (1.0 - t)^2 \cdot t + 3 \cdot y2 \cdot (1.0 - t) \cdot t^2 + y3 \cdot t^3$$
$$0 \leqq t \leqq 1$$

# FIG. 2

```
                          ┌─10
          ┌─────────────────────┐
          │   CONTROL POINT      │
          │   COORDINATE         │                              ┌─12
          │   ACQUIRING UNIT     │              ┌───────────────────────────┐
          └─────────────────────┘              │  DIVISION NUMBER           │
                     │        ┌─11              │  SETTING UNIT              │
                     ▼                13 DISTANCE│                           │
          ┌─────────────────────┐   PARAMETER   │                           │
          │   INTER-CONTROL      │──────────────▶│                           │
          │   POINT DISTANCE     │              │     ┌──────────┐           │
          │   CALCULATION UNIT   │              │     │  BEZIER  │           │
          └─────────────────────┘              │     │ DIVISION │           │
                     │  15 COORDINATE           │     │  TABLE   │           │
                     │     PARAMETER            │     └──────────┘           │
                     ▼                          │              12a           │
          ┌─────────────────────┐  ┌─16         └───────────────────────────┘
          │   BEZIER DIVISION    │◀──────────────────────┘
          │   APEX               │
          │   CALCULATION UNIT   │  14  NUMBER OF
          └─────────────────────┘      DIVISIONS
                     │  17 LINE SEGMENT
                     │     PARAMETER
                     ▼
          ┌─────────────────────┐  ┌─18
          │   LINE SEGMENT       │
          │   DRAWING UNIT       │
          └─────────────────────┘
                     │
                     ▼
          ┌─────────────────────┐  ┌─19
          │   DRAWING DATA       │
          └─────────────────────┘
```

# FIG. 3

```
┌─────────────────────────┐
│   CONTROL POINT         │ ⟋ 10
│   COORDINATE INPUT      │
│   UNIT                  │
└─────────────────────────┘
            │          ⟋ 1
            ▼
┌─────────────────────────┐
│   BEZIER CURVE          │
│   DIVISION UNITS        │ ⟋ 11~17
└─────────────────────────┘
            │
            ▼  ⟋ 103
┌─────────────────────────┐
│   COORDINATE            │
│   CONVERSION UNIT       │
└─────────────────────────┘
            │
            ▼  ⟋ 104
┌─────────────────────────┐
│   CONTOUR               │
│   GENERATION UNIT       │
└─────────────────────────┘
```

100

```
┌─────────────────────────┐          ⟋ 106
│   ANTI-ALIAS CIRCUIT    │◄────►┌─────────────────────┐
└─────────────────────────┘      │   OUTLINE BUFFER    │
            │  ⟋ 105              └─────────────────────┘
            ▼  ⟋ 107
┌─────────────────────────┐
│   MASK GENERATION       │◄──────────────┘
│   UNIT                  │
└─────────────────────────┘
            │
            ▼  ⟋ 108
┌─────────────────────────┐          ┌─────────────────────┐  ⟋ 111
│   FILL-IN UNIT          │          │   IMAGE BUFFER      │
└─────────────────────────┘          └─────────────────────┘
            │                                   │
            │         ⟋ 113                     ▼  ⟋ 112
            │    ┌─────────────────┐   ┌─────────────────────┐
            │    │   COLOR         │◄──│   FILTER UNIT       │
            │    │   CONVERSION    │   └─────────────────────┘
            │    │   UNIT          │
            │    └─────────────────┘
            ▼           ▼
┌─────────────────────────┐  ⟋ 109
│   COMBINING UNIT        │
└─────────────────────────┘
            │
            ▼  ⟋ 110
┌─────────────────────────┐
│   DITHERING UNIT        │
└─────────────────────────┘
```

# FIG. 4

| DISTANCE PARAMETER | NUMBER OF DIVISIONS |
|---|---|
| $1024 \leqq L$ | $2^6 = 64$ |
| $256 \leqq L < 1024$ | $2^5 = 32$ |
| $16 \leqq L < 256$ | $2^4 = 16$ |
| $0 \leqq L < 16$ | $2^3 = 8$ |

# FIG. 5

| NUMBER OF DIVISIONS | t INPUT VALUE (BINARY NOTATION) |
|---|---|
| $2^3 = 8$ (SECTIONS) END POINTS: 9 | 1ST TIME: 0.000<br>2ND TIME: 0.001<br>3RD TIME: 0.010<br>4TH TIME: 0.011<br>5TH TIME: 0.100<br>6TH TIME: 0.101<br>7TH TIME: 0.110<br>8TH TIME: 0.111<br>9TH TIME: 1.000<br>※t INCREASES AT AN AMOUNT 0.001. |
| $2^4 = 16$ (SECTIONS) END POINTS: 17 | 1ST TIME: 0.0000<br>2ND TIME: 0.0001<br>3TH TIME: 0.0010<br>4TH TIME: 0.0011<br>5TH TIME: 0.0100<br>6TH TIME: 0.0101<br>7TH TIME: 0.0110<br>8TH TIME: 0.0111<br>9TH TIME: 0.1000<br>10TH TIME: 0.1001<br>11TH TIME: 0.1010<br>12TH TIME: 0.1011<br>13TH TIME: 0.1100<br>14TH TIME: 0.1101<br>15TH TIME: 0.1110<br>16TH TIME: 0.1111<br>17TH TIME: 1.0000<br>※t INCREASES AT AN AMOUNT 0.0001. |

# FIG. 6

```
        ┌─────────────────────────┐
        │  BEZIER CURVE DIVISION  │
        │        PROCESS          │
        └─────────────────────────┘
                    │
                    ▼
        ┌─────────────────────────┐
        │    ACQUISITION OF THE   │  ─ S1
        │  COORDINATES OF BEZIER  │
        │   CURVE CONTROL POINTS  │
        └─────────────────────────┘
                    │
                    ▼
        ┌─────────────────────────┐
        │    CALCULATION OF THE   │  ─ S2
        │   DISTANCE PARAMETER    │
        │ FROM THE CONTROL POINT  │
        │       COORDINATES       │
        └─────────────────────────┘
                    │
                    ▼
        ┌─────────────────────────┐
        │  SETTING THE NUMBER OF  │  ─ S3
        │        DIVISION         │
        └─────────────────────────┘
                    │
                    ▼
        ┌─────────────────────────┐
        │    CALCULATION OF THE   │  ─ S4
        │     DIVISION POINT      │
        │      COORDINATES        │
        └─────────────────────────┘
                    │
                    ▼
              ┌───────────┐
              │    END    │
              └───────────┘
```

# FIG. 7

1

21
CONTROL UNIT

22
MAIN MEMORY
UNIT

30

23
EXTERNAL
MEMORY UNIT

30

20 INTERNAL
BUS

24
OPERATION
UNIT

25
DISPLAY
UNIT

26
INPUT/OUTPUT
UNIT

<table>
<tr><td colspan="2" align="center">**INTERNATIONAL SEARCH REPORT**</td><td>International application No.<br>PCT/JP2009/069048</td></tr>
</table>

| | |
|---|---|
| A. CLASSIFICATION OF SUBJECT MATTER<br>*G06T11/20*(2006.01)i, *G09G5/20*(2006.01)i, *G09G5/24*(2006.01)i | |

According to International Patent Classification (IPC) or to both national classification and IPC

B. FIELDS SEARCHED

Minimum documentation searched (classification system followed by classification symbols)
G06T11/00-11/40, G09G5/00-5/42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-117411 A (Matsushita Electric Industrial Co., Ltd.),<br>19 April 2002 (19.04.2002),<br>paragraph [0077]<br>(Family: none) | 1-11 |

☐ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>03 December, 2009 (03.12.09) | Date of mailing of the international search report<br>15 December, 2009 (15.12.09) |
| Name and mailing address of the ISA/<br>Japanese Patent Office | Authorized officer |
| Facsimile No. | Telephone No. |

Form PCT/ISA/210 (second sheet) (April 2007)

**EP 2 346 000 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002117411 A
- JP H11203489 B
- JP H10198811 B
- JP H02126376 B
- JP 2008287183 A